## Europäisches Patentamt
## European Patent Office
## Office européen des brevets

(19)

(11) Numéro de publication: **0 042 884**

**A1**

(12)

# DEMANDE DE BREVET EUROPEEN

(21) Numéro de dépôt: **80103768.0**

(22) Date de dépôt: **02.07.80**

(51) Int. Cl.³: **H 02 K 25/00**
**H 02 K 23/04, H 02 K 21/04**

(43) Date de publication de la demande:
**06.01.82  Bulletin  82/1**

(84) Etats contractants désignés:
**CH DE FR GB IT LI**

(71) Demandeur: **Martire, Roger**
**La Croix Dominique**
**F-46700 Puy l'Evêque(FR)**

(72) Inventeur: **Martire, Roger**
**La Croix Dominique**
**F-46700 Puy l'Evêque(FR)**

(74) Mandataire: **Casalonga, Alain et al,**
**Bureau D.A. Casalonga Lilienstrasse 77**
**D-8000 München 80(DE)**

(54) **Moteur magnétique à excitation électromagnétique.**

(57) Le moteur comprend un rotor (1) muni d'aimants permanents (4) sur sa périphérie, chaque élément statorique (5) comprend un aimant permanent (6) et une culasse (9) munie d'un bobinage (11) pouvant être alimenté en courant électrique par un collecteur (3) lorsqu'un aimant rotorique (4) passe dans l'entrefer de l'aimant (6).

FIG.1

EP 0 042 884 A1

Moteur magnétique à excitation électromagnétique.

La présente invention a pour objet une machine tournante motrice comportant un ou plusieurs rotors se présentant sous la forme de disques plans ou de cylindres portant un certain nombre d'aimants permanents et tournant dans l'entrefer d'autres aimants permanents.

La présente invention a notamment pour objet de mettre à profit l'action d'un champ magnétique créé par un bobinage alimenté périodiquement en courant électrique de façon à dévier les lignes de force d'un champ magnétique statorique fixe provoquant l'entraînement du rotor par une action de répulsion et/ou d'attraction sur ses aimants permanents.

On connaît déjà par exemple par le brevet américain 3.361.973 ou par le certificat d'addition français n° 94.017, des moteurs magnétiques comportant un rotor en forme de disque plan muni d'une pluralité d'aimants permanents sur sa périphérie. Dans ces documents cependant les éléments statoriques sont uniquement constitués par des électro-aimants engendrant un champ magnétique au passage de chaque aimant rotorique. Cette disposition présente l'inconvénient de diminuer le rendement global du moteur magnétique en raison notamment de l'apparition de forces contre-électromotrices d'induction à l'intérieur même des électro-aimants statoriques.

Par opposition à ces modes de réalisation de type connu, la présente invention utilise la déviation des lignes de force du champ magnétique d'aimants permanents statoriques pour agir sur les aimants permanents rotoriques.

Le moteur magnétique à excitation électromagnétique de la présente invention comporte au moins un rotor muni au voisinage de sa périphérique d'une pluralité d'aimants rotoriques permanents. Le moteur comporte également au moins un élément statorique fixe coopérant avec le rotor. Selon la présente invention chaque élément statorique comprend au moins un aimant statorique permanent créant un champ magnétique tendant à repousser un aimant rotorique traversant ses lignes de force et des moyens d'excitation associés audit aimant statorique afin de dévier ses lignes de force en fonction de la position d'un aimant rotorique par rapport à l'aimant statorique. Les moyens d'excitation sont de préférence agencés de façon à supprimer la déviation précitée des lignes de force pendant le passage d'un aimant rotorique au voisinage de l'aimant statorique. Dans ces conditions, pendant le passage dudit aimant rotorique, les lignes de force de l'aimant statorique qui ne sont plus déviées, agissent directement sur l'aimant rotorique de façon à provoquer par réaction sur l'axe du rotor, un déplacement en rotation de ce dernier.

Dans un mode de réalisation préféré de l'invention, les moyens d'excitation comprennent, pour chaque élément statorique, une culasse formant avec l'aimant statorique associé, un circuit magnétique fermé. La culasse porte un bobinage qui peut être alimenté en courant électrique continu pendant le passage d'un aimant rotorique au voisinage de l'aimant statorique. Lorsque le bobinage n'est pas alimenté, les lignes de force du champ magnétique de l'aimant statorique permanent se referment par la culasse de sorte que l'aimant statorique reste pratiquement sans influence sur tout aimant rotorique se trouvant dans son voisinage. Au contraire, lorsque le bobinage est alimenté au moyen d'un courant électrique dont le sens est choisi de façon que l'induction magnétique créée soit de sens inverse de l'induction magnétique engendrée par l'aimant statorique associé, les lignes de force de l'aimant statorique ne peuvent plus passer par la culasse de sorte que le champ magnétique créé par l'aimant statorique permanent agit pleinement sur un aimant rotorique se trouvant dans son voisinage.

On notera bien entendu que l'intensité du courant électrique alimentant le bobinage de la culasse doit être choisie de façon telle que le champ magnétique créé dans ladite culasse lorsque le bobinage est alimenté reste inférieur au champ coercitif de l'aimant statorique associé afin de ne pas désaimanter ledit aimant.

Dans un mode de réalisation préféré de l'invention, chaque aimant statorique est disposé de façon à repousser un aimant rotorique passant au voisinage lorsque le bobinage de la culasse est alimenté.

3

Dans un mode de réalisation préféré de l'invention, le rotor est en forme de disque plan de l'épaisseur des aimants rotoriques. Les aimants rotoriques sont tels qu'ils créent chacun un champ magnétique dont les lignes de force sont perpendiculaires au plan du rotor.

Pour augmenter les performances du moteur magnétique de l'invention il est possible de prévoir que chaque élément statorique comprenne deux aimants statoriques permanents disposés à une certaine distance angulaire l'un de l'autre, chacun étant associé à une culasse portant un bobinage comme précédemment. Les deux bobinages sont cependant inversés de façon que lorsqu'ils sont simultanément alimentés, l'un des éléments statoriques repousse un élément rotorique qui se trouve dans son voisinage tandis que l'autre l'attire. Lors du passage d'un aimant rotorique au voisinage d'un élément statorique, on obtient donc une force double sur le rotor.

Les aimants statoriques peuvent présenter une forme de fer à cheval enserrant la périphérie du rotor.

Dans un autre mode de réalisation chaque élément statorique peut comprendre deux aimants statoriques disposés sensiblement dans un même plan radial de chaque côté de la périphérie du rotor, chaque aimant étant associé à une culasse comme précédemment. Les poles des deux éléments statoriques sont alors disposés de façon inversée.

Dans tous les cas il convient de maintenir l'entrefer entre les aimants rotoriques et les éléments statoriques à une valeur minimale déterminée par les tolérances de fabrication.

Par ailleurs, il est important de diminuer la valeur des courants de Foucault susceptibles d'apparaître en raison du mouvement du rotor. Dans ce but, chaque élément statorique comprend de préférence deux paires de pièces polaires disposées sensiblement perpendiculairement au plan du rotor et réalisées en un matériau non conducteur de l'électricité tel que la ferrite à haute perméabilité et à très faible hystérésis. Les pièces polaires sont reliées entre elles par une culasse bobinée et un aimant permanent de fermeture. Les aimants rotoriques seront de préférence également réalisés en un matériau non conducteur de l'électricité tel que la ferrite.

Les aimants statoriques, en raison de leur éloignement du rotor et de la présence des pièces polaires formant écran entre eux et le rotor, peuvent par contre être réalisés en tout matériau approprié présentant une grande induction et un champ coercitif très élevé, tel que terres rares, cobalt...

Dans une variante l'aimant de fermeture est placé à l'intérieur du bobinage de la culasse, ce qui a pour effet d'abaisser encore, outre l'inductance, la force contre électromotrice du circuit. De plus, le risque de désaimantation de l'aimant statorique est supprimé puisque l'induction magnétique créée par le bobinage est de même sens que celle engendrée par l'aimant ainsi bobiné.

Dans un autre mode de réalisation également préféré de l'invention, le rotor est de forme cylindrique. Les aimants rotoriques sont alors disposés de façon à créer chacun un champ magnétique dont les lignes de force sont sensiblement radiales. Les éléments statoriques comprennent alors deux paires de pièces polaires disposées sensiblement dans un plan radial sensiblement tangentiellement par rapport au rotor cylindrique.

Comme dans le mode de réalisation précédent, les pièces polaires sont réalisées en un matériau non conducteur de l'électricité tel que la ferrite. Elles sont reliées entre elles par une culasse bobinée et un aimant de fermeture. De la même manière que précédemment, il est possible de disposer l'aimant de fermeture à l'intérieur du bobinage de la culasse.

L'alimentation en courant électrique continu des différents bobinages peut être réalisée par tout dispositif de commutation approprié. C'est ainsi que l'on pourra utiliser un collecteur à lames solidaire de l'axe du rotor. On pourra également prévoir un dispositif électronique de commutation tenant compte de la vitesse de rotation du rotor pour alimenter les différents bobinages des éléments statoriques.

5

L'utilisation d'une alimentation électronique comportant par exemple des éléments transistorisés, permet de réduire la quantité de courant traversant le dispositif de commutation en supprimant ainsi l'apparition d'étincelles aux contacts.

Il peut s'avérer nécessaire de prévoir un système d'avance à la commutation en fonction de la vitesse du rotor. Les bobinages des éléments statoriques se comportent en effet d'une manière analogue à une self induction, de sorte que l'intensité du courant est en retard sur la tension appliquée. En réalité il s'agit plus d'une "inertie magnétique" que d'une inductance à proprement parler. Par un choix convenable du volume de l'aimant permanent statorique du noyau et du bobinage, l'inductance se trouve en effet pratiquement annulée par la saturation du noyau bobiné par le flux magnétique de l'aimant permanent.

Cette avance de la commutation peut avantageusement être réalisée de façon automatique par un variateur centrifuge.

Dans un mode de réalisation préféré, le collecteur solidaire en rotation de l'axe du rotor peut être déplacé en translation sur cet axe en fonction de la vitesse du rotor. Les lames de contact du collecteur sont sensiblement trapézoïdales et obliques par rapport à l'axe et les contacts sont fixes. On obtient ainsi une modification du moment et de la durée de la commutation en fonction de la vitesse du rotor compensant le temps de montée en intensité. On peut obtenir le même résultat avec un collecteur fixe et des contacts mobiles.

Dans un autre mode de réalisation préféré, au moins une bobine d'électro-aimant permettant la récupération des impulsions de courant apparaissant aux bornes des bobinages des éléments statoriques, se trouve branchée dans le circuit d'alimentation et coopère avec l'un des aimants rotoriques au moment de la fermeture et de l'ouverture du circuit d'alimentation par le dispositif de commutation. Ces impulsions de courant précitées augmentant ainsi l'effet des éléments statoriques proprement dits.

La présente invention sera mieux comprise à l'étude de quelques modes de réalisation décrits à titre d'exemples nullement limitatifs et illustrés par les dessins annexés sur lesquels :

la fig. 1 représente très schématiquement une vue de côté du rotor d'un moteur magnétique selon l'invention et d'un élément statorique selon un premier mode de réalisation;

la fig. 2 est une vue en élévation d'un rotor de moteur magnétique selon l'invention coopérant selon un deuxième mode de réalisation avec une paire d'éléments statoriques dont l'un travaille en attraction et l'autre en répulsion;

la fig. 3 est une vue de côté d'une portion du rotor d'un moteur magnétique selon l'invention selon un troisième mode de réalisation dans lequel chaque élément statorique est constitué par deux aimants permanents inversés;

la fig. 4 est une vue analogue à la fig. 2 d'un autre mode de réalisation de l'invention;

la fig. 5 est une vue de côté de l'électro-aimant de récupération visible sur la fig. 4;

la fig. 6 montre un schéma électrique d'alimentation des différents bobinages statoriques du mode de réalisation des fig. 4 et 5;

la fig. 7 est une vue analogue à la fig. 3 d'un autre mode de réalisation;

la fig. 8 est une vue schématique d'un mode de réalisation comportant un rotor cylindrique;

la fig. 9 est un schéma d'une alimentation électronique; et

la fig. 10 montre schématiquement les principaux éléments d'un variateur automatique de commutation.

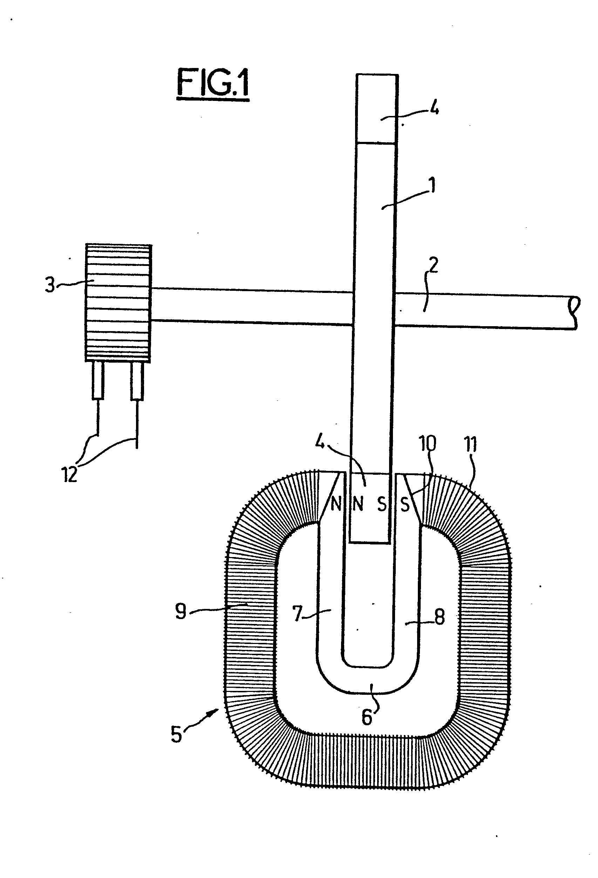

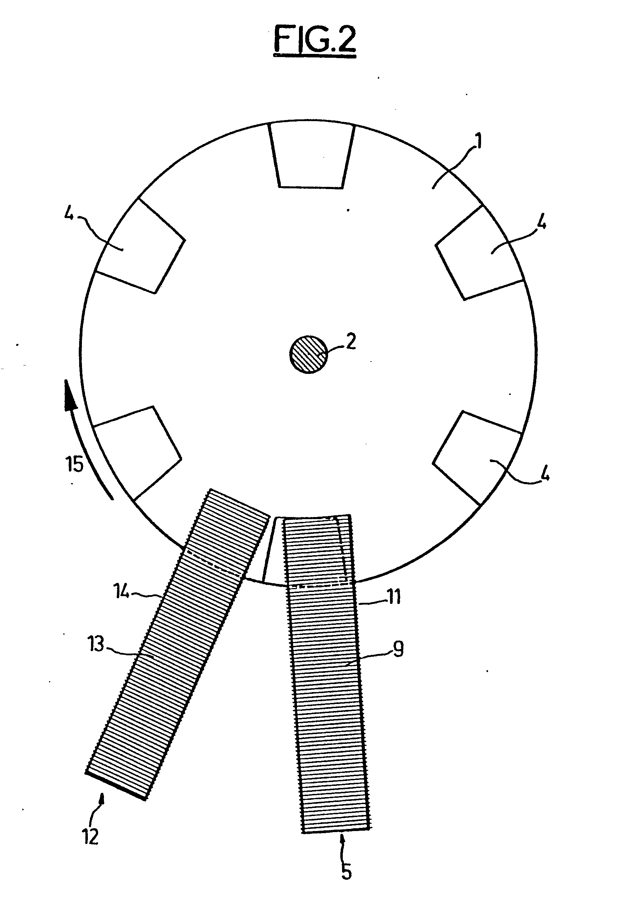

Tel qu'il est représenté très schématiquement sur la fig. 1, le moteur magnétique de l'invention comprend un rotor 1 en forme de disque plan de faible épaisseur monté en vue de sa rotation sur un arbre 2 muni à l'une de ses extrémités d'un collecteur à lames 3. Le rotor 1 est muni au voisinage de sa périphérie d'une pluralité d'aimants rotoriques permanents 4 de forme sensiblement trapézoïdale comme on peut le voir en particulier sur la fig. 2 qui montre le même rotor vu de face. Chaque aimant rotorique permanent 4 crée un champ magnétique dont les lignes de force sont perpendiculaires au plan du rotor. C'est ainsi que l'on voit apparaître sur les deux faces opposées du disque plan constituant le rotor 1 les faces polaires respectives nord et sud des aimants rotoriques 4 (voir fig. 1).

Le rotor 1 coopère dans le mode de réalisation de la fig. 1 avec un élément statorique 5 comprenant un aimant statorique permanent 6 en forme de fer à cheval dont les branches 7 et 8 viennent enserrer la périphérie du rotor 1 dans la zone où se trouvent les aimants rotoriques 4. Dans cette zone, l'aimant statorique permanent 6 définit donc, si l'on fait abstraction du reste de l'élément statorique 5, un champ magnétique dont les lignes de force sont perpendiculaires au plan du rotor 1. Les faces polaires nord et sud de l'aimant 6 se trouvent en opposition avec les faces polaires nord et sud d'un aimant rotorique 4 avec un entrefer maintenu à une valeur minimale compte tenu des tolérances de fabrication.

L'élément statorique 5 se complète par une culasse 9 également en forme de fer à cheval, venant entourer l'aimant permanent 6. La culasse 9 peut être réalisée en fer doux divisé ou en ferrite à haute perméabilité magnétique et à faible hystérésis. Les faces des branches 7 et 8 de l'aimant permanent 6 qui sont opposées aux faces en regard du rotor 1 sont avantageusement biseautées comme visible en 10 sur la fig. 1. Des surfaces correspondantes pratiquées aux extrémités de la culasse 9 entrent en contact avec ces faces biseautées 10 et se trouvent fixées par collage ou par tout autre moyen sur les branches 7 et 8 de l'aimant 6. La culasse 9 porte un bobinage réalisé au moyen d'un fil conducteur isolé 11 de faible résistance électrique qui peut être alimenté en courant électrique par les connexions 12 et par l'intermédiaire du collecteur à lames 3 au moyen d'une source de courant électrique continu non représentée sur la figure.

La culasse 9 constitue avec l'aimant permanent 6 un circuit magnétique fermé de sorte que les lignes de force du champ magnétique créé par l'aimant statorique permanent 6 se referment par la culasse, le champ magnétique de l'aimant statorique permanent 6 n'ayant pratiquement aucune action dans
l'entrefer entre les branches 7 et 8 tant que le bobinage 11
n'est pas alimenté en courant électrique. Au contraire, lorsque ce bobinage est alimenté en courant électrique de façon
que le champ magnétique créé dans la culasse, tout en restant
inférieur au champ coercitif de l'aimant statorique 6, soit
suffisant pour provoquer la déviation des lignes de force du
champ de l'aimant 6, ces lignes de force passent alors dans
l'entrefer entre les branches 7 et 8. Pour obtenir ce résultat
il convient bien entendu de choisir le sens du courant électrique alimentant le bobinage 11 de façon telle que l'induction magnétique créée par la culasse 9 soit de sens inverse de
l'induction magnétique créée par l'aimant permanent 6. Autrement dit le courant électrique alimentant le bobine 11 doit
être tel qu'une face polaire sud se trouve en contact avec
l'extrémité polaire sud de la branche 8 de l'aimant 6 tandis
que l'autre extrémité de la culasse 9 définit une face polaire
nord en regard de la face polaire nord de la branche 7 de
l'aimant 6. Dans ces conditions, lorsque le bobinage 11 est
alimenté en courant électrique le champ magnétique créé par
l'aimant statorique permanent 6 agit sur un aimant rotorique 4
se trouvant entre les branches 7 et 8 de l'aimant 6 de façon à
repousser l'aimant rotorique 4 entraînant ainsi la rotation du
rotor 1 autour de l'arbre 2. Le bobinage 11 est alimenté
périodiquement dès qu'un aimant rotorique 4 se trouve entre
les branches 7 et 8 de l'aimant statorique 6. L'alimentation
en courant électrique est coupée dès que l'aimant rotorique 4
vient de quitter l'entrefer de l'aimant statorique 6. Cette
commutation peut être réalisée par tout moyen approprié tel
que le collecteur à lames 3 de la fig. 1 et ceci pour chaque
passage d'un aimant rotorique 4 dans l'entrefer de l'aimant
statorique 6.

   Dans le mode de réalisation de la fig. 2 où les pièces
identiques portent les mêmes références, on retrouve un premier élément statorique 5 constitué comme sur la fig. 1 par un
aimant statorique permanent en fer à cheval et une culasse 9
munie d'un bobinage 11 l'ensemble travaillant en répulsion. On y adjoint un deuxième élément statorique 12 disposé à une certaine distance angulaire du premier et de même structure. Cet élément statorique 12 comprend donc comme le précédent un aimant en fer à cheval permanent associé à une culasse 13 munie d'un bobinage 14. Le bobinage 14 ainsi que les faces polaires de l'aimant statorique permanent associé sont cependant inversés de façon que l'élément statorique 12 travaille en attraction.

Dans la position représentée sur la fig. 2, un aimant rotorique 4 se trouve partiellement dans l'entrefer du premier élément statorique 5. Le bobinage 11 de la culasse 9 de ce dernier est alimenté en courant électrique de sorte que l'aimant rotorique 4 soit repoussé, provoquant ainsi la rotation du rotor 1 dans le sens de la flèche 15. Le bobinage 14 de la culasse 13 du deuxième élément statorique 12 est également alimenté en courant électrique de sorte qu'il agisse par attraction sur le même aimant rotorique 4 provoquant un couple dans le même sens ce qui améliore les performances du moteur.

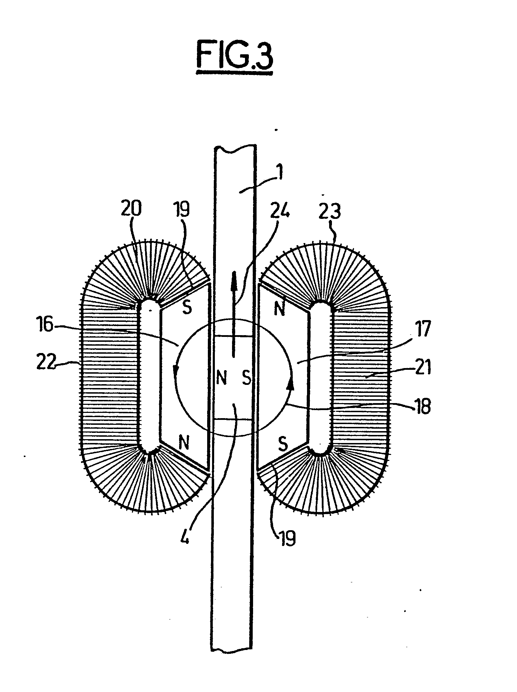

Dans le mode de réalisation de la fig. 3 où les pièces identiques portent les mêmes références, chaque élément statorique comprend deux aimants statoriques permanents 16 et 17 disposés sensiblement dans le même plan radial par rapport au rotor 1 de chaque côté de la périphérie dudit rotor en laissant un espace minimal compte tenu des tolérances de fabrication afin de définir l'entrefer le plus petit possible. Les deux aimants permanents 16 et 17 sont disposés de façon inversée leurs extrémités respectives définissant une face polaire nord se trouvant en regard des extrémités respectives définissant une face polaire sud de l'autre aimant comme on peut le voir sur la fig. 3. Les lignes de force des champs magnétiques créés par ces deux aimants sont donc sensiblement parallèles au plan du rotor 1. La combinaison de ces deux aimants 16 et 17 engendre un champ magnétique dont les lignes de force sont représentées schématiquement sur la fig. 3 sous la forme d'un cercle 18. Les extrémités de chacun des aimants permanents 16 et 17 présentant des faces polaires biseautées 19 qui sont en contact avec des faces correspondantes de deux culasses 20 et 21 susceptibles de refermer les lignes de force des champs magnétiques créés par les aimants respectifs 16 et 17. Chaque culasse porte un bobinage 22 et 23 qui est analogue au bobinage 11 des modes de réalisation précédents et qui peut être alimenté en courant électrique de façon à dévier les lignes de force du champ magnétique créé par l'aimant 16 ou 17 associé. Dans ce mode de réalisation les bobinages 22 et 23 sont alimentés dès que l'aimant permanent 4 du rotor 1 pénètre dans l'entrefer des deux aimants statoriques 16 et 17. Le rotor 1 se déplaçant dans le sens de la flèche 24, on voit que les faces polaires nord et sud de l'aimant rotorique 4 se trouvent tout d'abord en face des faces polaires nord et sud desdeux aimants statoriques 16 et 17. L'aimant rotorique 4 se trouve donc repoussé dans le sens de la flèche 24. En même temps, l'aimant rotorique 4 se trouve attiré par les autres faces polaires respectivement sud et nord des mêmes aimants statoriques 16 et 17. Si le courant d'alimentation des bobinages 22 et 23 n'était pas coupé, l'aimant rotorique atteindrait une position d'équilibre pour laquelle ses faces polaires nord et sud seraient respectivement en regard de faces polaires de nom contraire des aimants statoriques 16 et 17. Le courant d'alimentation des bobinages 22 et 23 est donc coupé lorsque l'aimant rotorique 4 parvient à cette position d'équilibre. Dès que le courant d'alimentation se trouve coupé, les lignes de force des champs magnétiques créés par les aimants statoriques 16 et 17 se referment par les culasses 20 et 21 de sorte qu'aucune force ne maintient plus l'aimant rotorique dans sa position d'équilibre et que le rotor 1 peut poursuivre son mouvement de rotation. Cette succession d'opérations est répétée pour le passage de chaque aimant rotorique 4.

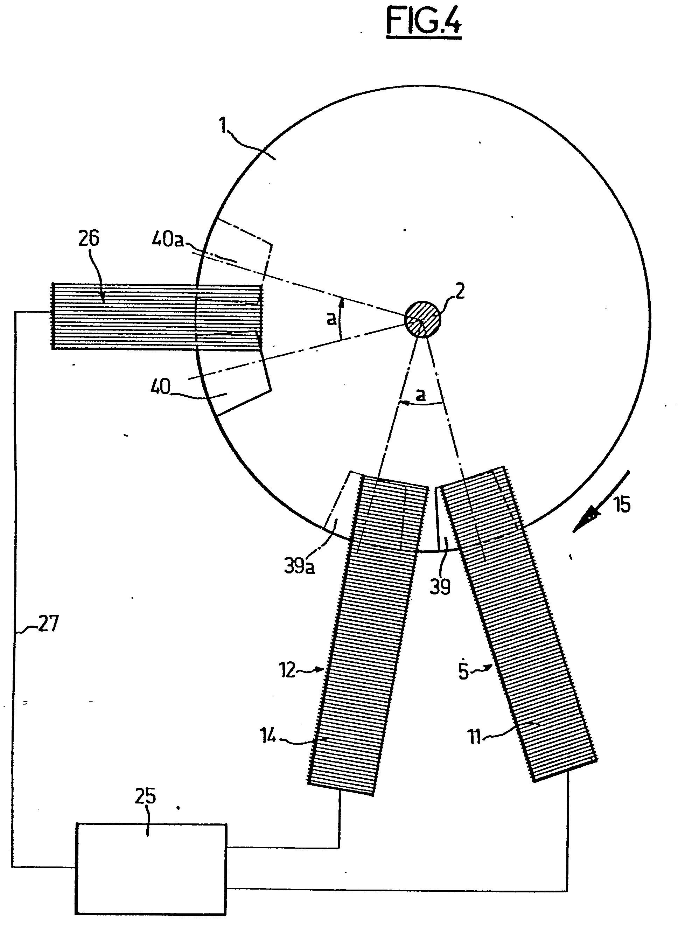

Dans le mode de réalisation de la fig. 4 les éléments identiques aux modes de réalisation précédents et en particulier au mode de réalisation représenté sur les fig. 1 et 2 portent les mêmes références. Pour simplifier on n'a représenté sur le rotor de la fig. 4 que deux aimants rotoriques 39 et 40. On comprendra bien entendu que le rotor pourrait en comprendre un plus grand nombre répartis régulièrement sur sa périphérie ou un nombre plus faible, les aimants ayant alors des dimensions plus importantes afin d'obtenir un temps de commutation plus long. On retrouve sur la fig. 4 les deux éléments statoriques 5 et 12 comportant respectivement les bobinages 11 et 14. Ces bobinages sont alimentés en courant électrique par l'intermédiaire d'un circuit électrique 25 qui comprend un dispositif de commutation approprié tel que le collecteur 3 visible sur la fig. 1.

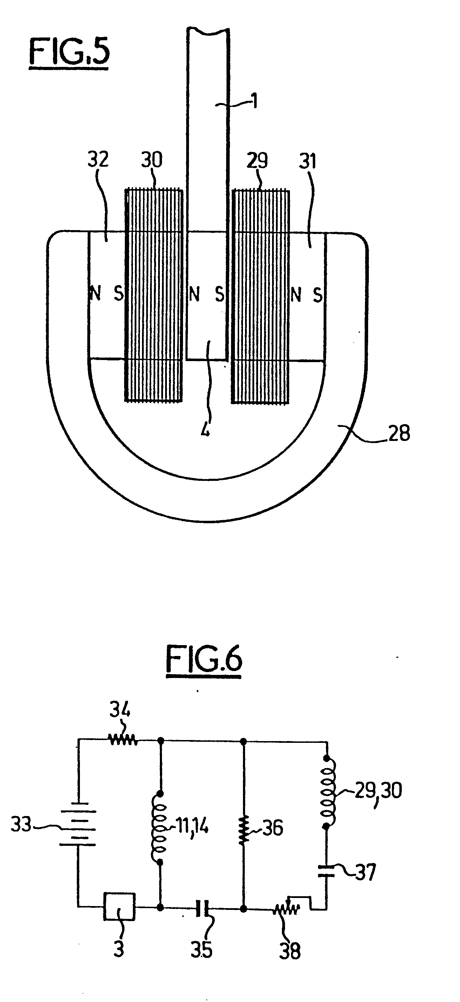

Dans ce mode de réalisation, le moteur comporte en outre une bobine d'électro-aimant 26 permettant de récupérer les impulsions de courant apparaissant aux bornes des bobinages 11 et 14 au moment de la fermeture et de l'ouverture du circuit d'alimentation 25 par l'intermédiaire du collecteur 3. Dans ce but, la bobine d'électro-aimant de récupération 26 connectée au circuit d'alimentation par la connexion 27, présente un noyau en forme de fer à cheval 28 entourant la périphérie du rotor 1 comme on peut le voir sur la fig. 5. Les deux portions d'extrémité du fer à cheval 28 portent deux bobinages 29 et 30 disposés avec un faible entrefer de chaque côté du rotor 1. Le noyau 28 est avantageusement réalisé au moyen d'un matériau à haute perméabilité et à faible hystérésis tel que du fer divisé ou du ferrite.

Dans le mode de réalisation représenté sur la fig. 5, le noyau en fer à cheval 28 comporte en outre de chaque côté du rotor 1 deux aimants permanents intercalaires 31 et 32 permettant de retarder la fermeture du flux dans les bobines 29 et 30 au moment du passage des aimants permanents 4 du rotor.

Un exemple préféré de circuit d'alimentation est représenté sur la fig. 6. On retrouve sur cette figure le dispositif de commutation 3 et les bobinages 11 et 14 des éléments statoriques représentés sous la forme symbolique d'une seule bobine de self induction branchée aux bornes du générateur de courant continu 33 par l'intermédiaire de la résistance de charge 34 et du dispositif de commutation 3. Le circuit comporte en outre un condensateur 35 disposé aux bornes de la bobine de self induction 11, 14 par l'intermédiaire de la résistance 36 de façon à diminuer l'inductance du circuit d'alimentation des bobines 11 et 14 des éléments statoriques.

Les bobines 29 et 30 de l'électro-aimant de récupération sont branchées dans un circuit résonant en série avec le condensateur 37 et le potentiomètre 38, l'ensemble du circuit résonant étant connecté aux bornes de la résistance 36.

De cette manière, les impulsions électriques apparaissant aux bornes de la résistance 36 lors de la fermeture et de l'ouverture du circuit d'alimentation par l'intermédiaire du dispositif de commutation 3, alimentent le circuit résonant et les bobinages 29 et 30 de l'électro-aimant de récupération.

L'électro-aimant de récupération 26 est placé à la périphérie du rotor 1 de façon à pouvoir coopérer, lorsqu'il est alimenté comme il vient d'être dit, avec l'un des aimants rotoriques autre que celui qui se trouve dans le champ d'action des éléments statoriques correspondants 5 et 12.

Pour bien comprendre le fonctionnement de ce mode de réalisation on se référera à la fig. 4. Au moment où l'un des aimants permanents rotoriques référencé 39 sur la fig. 4 et représenté en trait plein parvient entre les branches de l'élément statorique 5 celui-ci, de même que l'élément statorique 12 est brusquement alimenté par l'intermédiaire du collecteur 3 du circuit d'alimentation 25. La fermeture du circuit entraîne une impulsion de courant qui apparaît aux bornes de la résistance 36 et alimente de ce fait les bobines 29 et 30 de l'électro-aimant de récupération 26. Compte tenu de la position particulière donnée à la bobine d'électro-aimant de récupération 26, un autre aimant rotorique 40 se trouve à ce moment partiellement dans l'entrefer des bobines 29 et 30. Celles-ci sont branchées dans le circuit de telle sorte qu'elles exercent un effet d'attraction sur l'aimant rotorique 40 tendant à entraîner une rotation du rotor 1 dans le sens de la flèche 15. Cette action s'ajoute à l'action principale des éléments statoriques 5 et 12, le premier exerçant une action de répulsion sur l'aimant rotorique 39 et le second une action d'attraction sur le même aimant rotorique 39.

Un instant après, le rotor 1 ayant subi une rotation d'un angle a les aimants rotoriques 39 et 40 se trouvent dans les positions référencées 39a et 40a représentées en trait mixte sur la fig. 4. L'alimentation des bobinages 11 et 14 des éléments statoriques 5 et 12 est coupée, le circuit d'alimentation étant ouvert par le collecteur 3. Au moment de l'ouverture du circuit, une nouvelle impulsion, de sens opposé à la précédente, apparaît aux bornes de la résistance 36 alimentant à nouveau mais cette fois avec un courant inverse, les bobinages 29 et 30 de l'électro-aimant de récupération 26. Il en résulte cette fois un effet de répulsion sur l'aimant rotorique 40a tendant à nouveau à entraîner le rotor en rotation dans le sens de la flèche 15.

Comme on le voit il est ainsi possible d'améliorer les performances du moteur de l'invention.

On notera que le potentiomètre 38 permet un réglage aisé de la vitesse de rotation du moteur par action sur le point de résonance du circuit résonant comprenant les bobinages 29 et 30.

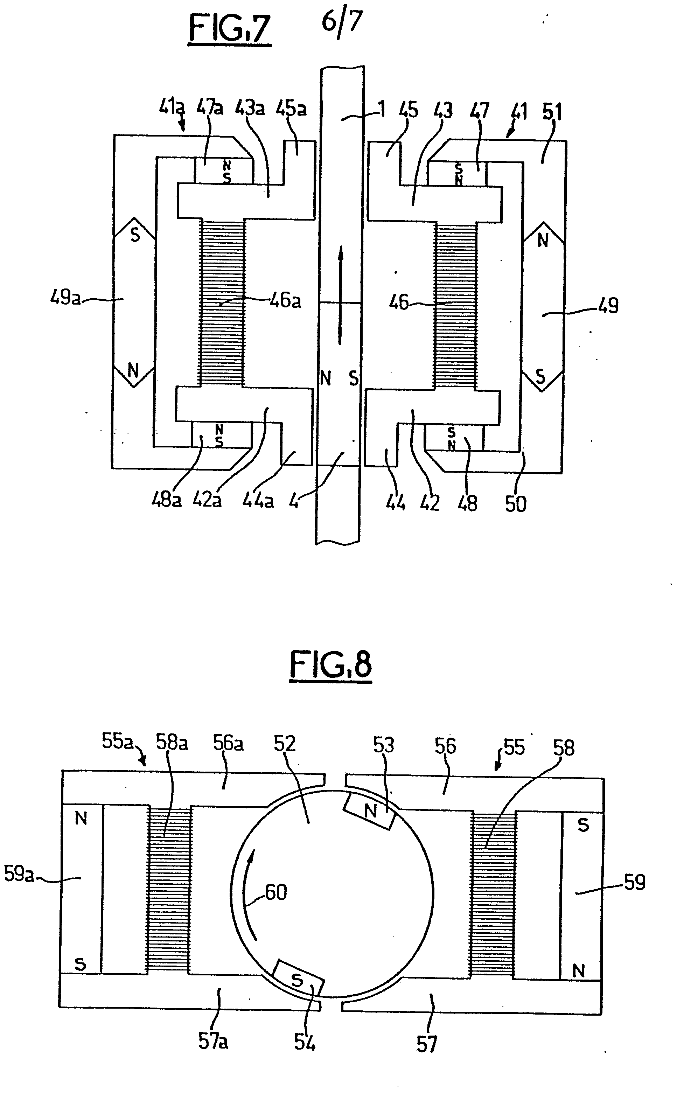

Dans le mode de réalisation illustré sur la fig. 7 où les pièces identiques portent les mêmes références, on retrouve un rotor 1 en forme de disque plan, l'un des aimants rotoriques 4 ayant été représenté. Dans ce mode de réalisation particulier, chaque élément statorique est constitué par deux demi-éléments 41, 41a identiques et disposés de part et d'autre du rotor 1. On ne décrira que l'un des demi-éléments statoriques, les organes de l'autre portant les mêmes références affectées de l'indice a.

Le demi-élément 41 comprend une paire de pièces polaires 42 et 43 sensiblement perpendiculaires au plan du rotor 1. Les extrémités des pièces polaires présentent un bord replié 44 et 45 sensiblement parallèle au plan du rotor 1. Les deux pièces polaires 42 et 43 sont reliées entre elles par une culasse bobinée 46 sensiblement parallèle au plan du rotor 1 et disposée entre les deux pièces polaires à un certain écartement du plan du rotor 1. Le circuit magnétique est refermé par l'intermédiaire de deux aimants permanents 47 et 48 placés sensiblement dans l'axe de la culasse 46 à l'extérieur des pièces polaires 42 et 43 et un aimant statorique permanent 49 disposé de manière sensiblement parallèle à la culasse 46 avec un certain écartement de celle-ci du côté opposé du rotor 1 par rapport à la culasse 46. De cette manière, l'aimant permanent 49 est plus éloigné du rotor 1 que la culasse bobinée 46. Les pièces de fermeture 50 et 51 ferment le circuit magnétique entre les aimants 47 et 48 et l'aimant statorique permanent 49. On notera que la polarité de l'aimant statorique 49a et des aimants 47a et 48a, est inversée par rapport à celle des aimants correspondants 49, 47 et 48.

Les pièces polaires 42, 43 ainsi que la culasse 46 sont avantageusement réalisées d'une seule pièce en un matériau non conducteur de l'électricité de préférence en ferrite. Les pièces de fermeture 50 et 51 peuvent être réalisées en fer divisé et sont rendues solidaires par tout moyen approprié du bâti fixe du moteur non représenté sur la figure.

Le principe de fonctionnement de ce mode de réalisation est pratiquement identique à celui du mode de réalisation de la fig. 3. Lorsque l'aimant rotorique permanent 4 pénètre dans l'entrefer des pièces polaires respectives 42, 42a de l'élément statorique, les bobines 46, 46a se trouvent alimentées de façon que les extrémités 44, 44a des pièces polaires 42, 42a définissent respectivement un pole sud et un pôle nord repoussant les pôles de même nom de l'aimant rotorique 4 qui se trouve dans leur entrefer. Dans le même temps, les extrémités 45, 45a des pièces polaires 43, 43a définissent un pôle sud et un pôle nord qui sont tels qu'ils attirent au contraire l'aimant permanent 4. Lorsque l'aimant 4 est parvenu dans l'entrefer des extrémités 45, 45a des pièces polaires 43, 43a on cesse d'alimenter les bobinages 46, 46a. Les lignes de force des champs magnétiques créés par les aimants permanents statoriques 49, 49a se referment alors par les culasses 46, 46a de sorte que l'aimant rotorique permanent 4 n'est plus soumis à aucune force, le rotor 1 poursuivant son mouvement de rotation.

Dans ce mode de réalisation on constate par rapport au mode de réalisation de la fig. 3 une amélioration du rendement due à une diminution des courants de Foucault compte tenu de l'éloignement des aimants rotoriques 49, 49a et de la réalisation des pièces polaires 42, 42a et 43, 43a en un matériau
non conducteur de l'électricité.

Le mode de réalisation de la fig. 8 se différencie des
modes de réalisation précédents par la forme cylindrique du
rotor 52 qui est de préférence creux afin de réduire l'inertie. Dans ce mode de réalisation, les aimants rotoriques
permanents 53 et 54 qui sont ici seulement au nombre de deux
sont disposés de manière diamétralement opposée deux à deux.
Ces aimants permanents sont tels qu'ils créent un champ magnétique dont les lignes de force sont sensiblement radiales. La
face polaire périphérique de l'aimant 53 est, dans l'exemple
illustré, une face nord, tandis que la face polaire périphérique de l'aimant 54 est une face sud. Dans l'exemple illustré
l'élément statorique est constitué par deux demi-éléments
identiques 55, 55a disposés dans un plan radial par rapport au
rotor cylindrique 52. Le demi-élément statorique 55 comprend
deux pièces polaires 56 et 57 sensiblement rectilignes qui
sont disposées de manière sensiblement tangentielle par rapport au rotor cylindrique 52 en définissant un entrefer minimal par rapport à la périphérie de ce dernier. Les pièces
polaires 56 et 57 sont réunies entre elles par une culasse
bobinée 58 sensiblement rectiligne placée à un certain écartement du rotor cylindrique 52. Un aimant permanent statorique
59 réunit les extrémités des pièces polaires 56 et 57 situées
à l'opposé du rotor 52 par rapport à la culasse 58. Le demi-
élément statorique 55a est identique, les polarités de l'aimant 59a et du bobinage 58a étant cependant inversées.

Comme dans le mode de réalisation de la fig. 7, les
pièces polaires 56 et 57 et la culasse 58 sont avantageusement
réalisées en un matériau non conducteur de l'électricité tel
que la ferrite.

Le fonctionnement de ce mode de réalisation est quasiment
identique à celui du mode de réalisation de la fig. 7. Dans la
position illustrée, l'aimant permanent 54 dont la face polaire
est une face sud se trouve en regard de l'extrémité de la
pièce polaire 57a du demi-élément statorique 55a. Lorsque le rotor 52 se trouve dans cette position, on alimente le bobinage de la culasse 58a. Les lignes de force du champ magnétique créé par l'aimant permanent 59a sont donc déviées, l'extrémité de la pièce polaire 57a définissant également un pôle sud qui repousse l'aimant permanent 54 et entraîne une rotation dans le sens de la flèche 60 du rotor 52. L'extrémité de la pièce polaire 56a qui est alors une face nord attire en outre l'aimant permanent 54. Lorsque le rotor 52 a fait un demitour sur lui-même, on coupe l'alimentation en courant électrique du bobinage 58a et on alimente en courant électrique le bobinage 58. L'aimant permanent 54 qui se trouve à ce moment sensiblement en regard de l'extrémité de la pièce polaire 56 du demi-élément statorique 55 est alors repoussé à nouveau par la face sud définie par cette pièce polaire, compte tenu de l'orientation du champ magnétique créé par l'aimant permanent 59. Le rotor cylindrique 52 est donc entraîné dans un deuxième demi-tour. Cette succession d'opérations est répétée à chaque tour du rotor 52.

Dans les modes de réalisation des fig. 7 et 8, il serait possible et avantageux de disposer les aimants statoriques 49, 49a et 59, 59a à l'intérieur même des bobinages des culasses respectives 46, 46a et 58, 58a.

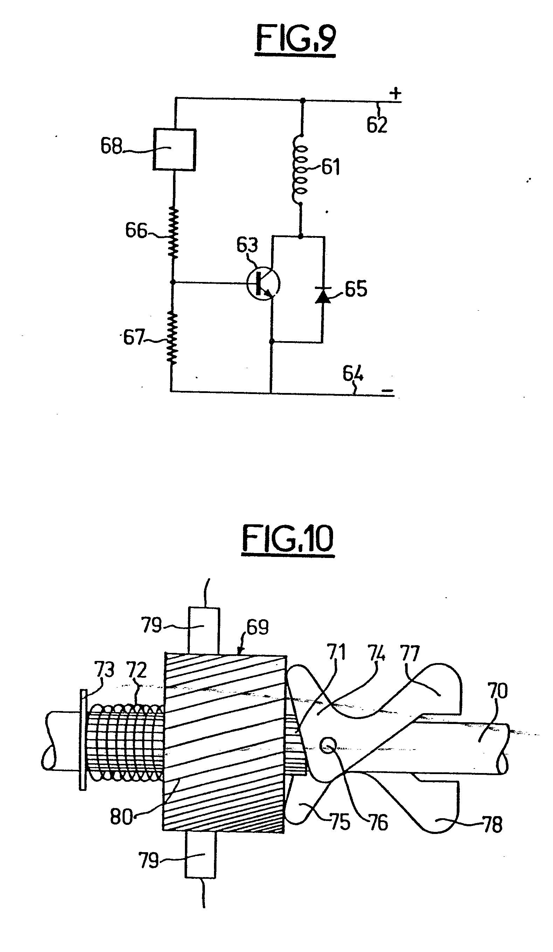

Sur la fig. 9 est illustré un exemple d'une alimentation électronique pour l'un des bobinages représenté par exemple sur les fig. 7 et 8. L'un de ces bobinages référencé 61 sur la fig. 9 est connecté entre une tension positive sur la ligne 62 et le collecteur du transistor 63 jouant le rôle de dispositif de commutation et dont l'émetteur est relié à la masse 64. Une diode 65 est branchée entre le collecteur et l'émetteur du transistor 63. Par ailleurs, la base du transistor 63 est reliée au point commun d'un pont diviseur constitué par les deux résistances 66 et 67, le collecteur de commutation étant représenté par le bloc 68 branché entre la tension positive 62 et la résistance 66.

Le collecteur 69 représenté sur la fig. 10 est monté sur l'axe 70 du rotor du moteur de l'invention de façon à être bloqué en rotation par rapport à l'axe 70 et à pouvoir se déplacer en translation sur cet axe. Dans ce but, la portion 71 de l'axe 70 sur laquelle est monté le collecteur 69, comporte une pluralité de cannelures qui coopèrent avec des évidements correspondants pratiqués dans l'alésage du collecteur 69. Un ressort de compression 72 bloqué par un épaulement 73 solidaire de l'axe 70, sollicite le collecteur 69 vers la droite de la fig. 10. Deux leviers coudés 74 et 75 articulés sur un axe transversal 76 solidaire de l'axe 70 prennent également appui sur la face frontale du collecteur 69 à l'opposé de la face d'appui du ressort 72. Des masselottes sont montées aux extrémités 77 et 78 des leviers coudés 74.

Les contacts 79 sont fixes et alimentent les bobinages du moteur de l'invention selon la position des barrettes de contact 80 qui sont pratiquées sur la surface extérieure du collecteur 69 et qui sont obliques par rapport à l'axe 70.

Selon la vitesse de rotation du rotor et de l'axe 70, les masselottes 77 et 78 s'écartent de l'axe 70 sous l'action de la force centrifuge entraînant une action de poussée des leviers coudés 74 et 75 qui fait se déplacer le collecteur 69 à l'encontre du ressort 72 vers la gauche de la fig. 10. Il en résulte une avance de commutation compte tenu de l'inclinaison des barrettes de contact 80.

Dans une réalisation pratique d'un moteur magnétique selon l'invention, il sera possible bien entendu de monter sur le même arbre plusieurs rotors identiques qui pourront avantageusement être décalés angulairement afin d'éviter tout point mort et d'obtenir une plus grande puissance. Par ailleurs, on comprendra qu'il serait possible de multiplier les éléments statoriques tels que ceux qui ont été décrits en les disposant à intervalles réguliers sur la périphérie du rotor de façon à augmenter la puissance obtenue pour le moteur.

## REVENDICATIONS

1. Moteur magnétique à excitation électromagnétique comportant au moins un rotor muni au voisinage de sa périphérie d'une pluralité d'aimants rotoriques permanents et au moins un élément statorique fixe coopérant avec ledit rotor, caractérisé par le fait que ledit élément statorique comprend au moins un aimant statorique permanent créant un champ magnétique tendant à repousser un aimant rotorique traversant ses lignes de force et des moyens d'excitation associés audit aimant statorique pour dévier ses lignes de force en fonction de la position d'un aimant rotorique par rapport à l'aimant statorique.

2. Moteur selon la revendication 1, caractérisé par le fait que les moyens d'excitation comprennent pour chaque élément statorique une culasse formant avec l'aimant statorique associé un circuit magnétique fermé, ladite culasse portant un bobinage qui peut être alimenté en courant électrique pendant le passage d'un aimant rotorique au voisinage de l'aimant statorique de façon à supprimer la déviation des lignes de force pendant le passage d'un aimant rotorique au voisinage de l'aimant statorique.

3. Moteur selon la revendication 2, caractérisé par le fait que le sens du courant d'alimentation est tel que l'induction magnétique créée dans la culasse soit de sens inverse de l'induction magnétique créée par l'aimant statorique, l'intensité du courant électrique étant d'autre part telle que le champ magnétique créé dans la culasse lorsque le bobinage est alimenté reste inférieure au champ coercitif de l'aimant statorique associé.

4. Moteur selon l'une quelconque des revendications précédentes, caractérisé par le fait que le rotor est en forme de disque plan de faible épaisseur, les aimants rotoriques étant tels qu'ils créent chacun un champ magnétique dont les lignes de force sont perpendiculaires au plan du rotor.

5. Moteur selon la revendication 4, caractérisé par le fait que chaque élément statorique comprend deux aimants statoriques disposés à une certaine distance angulaire l'un de l'autre chacun étant associé à une culasse portant un bobinage, les bobinages étant inversés de façon que lorsqu'ils sont simultanément alimentés, l'un des aimants statoriques repousse un aimant rotorique tandis que l'autre l'attire.

6. Moteur selon la revendication 4, caractérisé par le fait que chaque élément statorique comprend deux aimants statoriques disposés sensiblement dans un même plan radial de chaque côté de la périphérie du rotor avec un entrefer minimal, chacun étant associé à une culasse, les poles des deux aimants statoriques étant disposés de façon inversée.

7. Moteur selon la revendication 4, caractérisé par le fait que chaque élément statorique comprend deux paires de pièces polaires dirigées sensiblement perpendiculairement au plan du rotor et réalisées en un matériau non conducteur de l'électricité, tel que la ferrite, reliées entre elles par une culasse bobinée et un aimant permanent de fermeture plus éloigné du rotor que la culasse.

8. Moteur selon l'une quelconque des revendications 1 à 3, caractérisé par le fait que le rotor est de forme cylindrique de préférence creux, les aimants rotoriques étant disposés de façon à créer chacun un champ magnétique dont les lignes de force sont sensiblement radiales.

9. Moteur selon la revendication 8, caractérisé par le fait qu'il comporte à titre d'élément statorique, au moins une paire de pièces polaires disposées dans un plan radial sensiblement tangentiellement par rapport au rotor cylindrique et réalisées en un matériau non conducteur de l'électricité, tel que la ferrite, reliées entre elles par une culasse bobinée et un aimant permanent de fermeture.

10. Moteur selon la revendication 9, caractérisé par le fait que l'aimant de fermeture est disposé à l'intérieur du bobinage de la culasse.

11. Moteur selon l'une quelconque des revendications précédentes, caractérisé par le fait que l'alimentation des moyens d'excitation est faite par l'intermédiaire d'un collecteur solidaire en rotation de l'axe de rotation du rotor et pouvant être déplacé en translation sur cet axe en fonction de la vitesse de rotation, les lames du collecteur étant sensiblement trapézoïdales et obliques par rapport à l'axe de façon à modifier le moment et la durée de la commutation en fonction de la vitesse.

FIG.1

# FIG.2

## FIG.3

0042884

FIG.4

## FIG.5

N S    N S    N S

32   30   29   31

1

4

28

## FIG.6

34

33

11,14

36

29,30

37

3    35    38

## FIG.7

41a  47a  43a  45a          1  45  43  47  41  51

49a                                              49

N  S

46a                    46

48a  42a  44a  4          44  42  48  50

## FIG.8

55a  58a  56a  52    53  56  55  58

N                                    S

59a                                          59

60

57a  54    57

0042884

## FIG.9

## FIG.10

# 0042884

**Office européen des brevets**

## RAPPORT DE RECHERCHE EUROPEENNE

Numéro de la demande

EP 80 10 3768.0

| | DOCUMENTS CONSIDERES COMME PERTINENTS | | CLASSEMENT DE LA DEMANDE (Int. Cl.3) |
|---|---|---|---|
| Catégorie | Citation du document avec indication, en cas de besoin, des parties pertinentes | Revendication concernée | |
| X | US - A - 1 859 643 (H.L. WORTHINGTON) <br> * page 1, ligne 85 à page 2, ligne 48; page 3, lignes 4 à 26 * <br> -- | 1-3, 8-11 | H 02 K 25/00 <br> H 02 K 23/04 <br> H 02 K 21/04 |
| | US - A - 3 670 189 (P.P. MONROE) <br> * colonne 3, ligne 56 à colonne 4, ligne 58; fig. 1 et 2 * <br> -- | 1-11 | |
| | US - A - 2 570 531 (J.J. DRURY) <br> * colonne 1, ligne 38 à colonne 3, ligne 20 * <br> -- | 4-7, 11 | **DOMAINES TECHNIQUES RECHERCHES (Int. Cl.3)** |
| | FR - A - 1 201 160 (M. BAERMANN) <br> * page 2, colonne de droite, lignes 14 à 50 * <br> -- | 1,11 | H 02 K 21/00 <br> H 02 K 23/00 <br> H 02 K 25/00 <br> H 02 K 33/00 |
| A | US - A - 4 132 911 (C.S. GARRON) <br> * colonne 2, lignes 39 à 65 * <br> -- | | |
| A | US - A - 3 428 867 (M.C. BECKER) <br> * colonne 2, lignes 31 à 51 * <br> ---- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

☒ Le présent rapport de recherche a été établi pour toutes les revendications

| Lieu de la recherche | Date d'achèvement de la recherche | Examinateur |
|---|---|---|
| Berlin | 04-03-1981 | GESSNER |

OEB Form 1503.1  06.78